(19) Europäisches Patentamt
European Patent Office
Office européen des brevets

(11) Veröffentlichungsnummer: **0 231 836**
**B1**

(12) **EUROPÄISCHE PATENTSCHRIFT**

(45) Veröffentlichungstag der Patentschrift: **13.12.89**

(51) Int. Cl.⁴: **C09B 62/09,** C09B 62/513, D06P 1/38

(21) Anmeldenummer: **87100970.0**

(22) Anmeldetag: **23.01.87**

(54) **Wasserlösliche Disazoverbindungen, Verfahren zu ihrer Herstellung und ihre Verwendung als Farbstoffe.**

(30) Priorität: **01.02.86 DE 3603101**

(43) Veröffentlichungstag der Anmeldung:
**12.08.87 Patentblatt 87/33**

(45) Bekanntmachung des Hinweises auf die Patenterteilung:
**13.12.89 Patentblatt 89/50**

(84) Benannte Vertragsstaaten:
**BE CH DE FR GB IT LI**

(56) Entgegenhaltungen:
**EP-A- 0 042 108**
**EP-A- 0 087 113**
**EP-A- 0 167 858**
**GB-A- 2 026 527**

(73) Patentinhaber: **HOECHST AKTIENGESELLSCHAFT, Postfach 80 03 20, D-6230 Frankfurt am Main 80(DE)**

(72) Erfinder: **Meininger, Fritz, Dr., Schellenbergstrasse 67, D-8600 Bamberg(DE)**
Erfinder: **Steuernagel, Hans Helmut, Dr., An den Römergärten 2, D-6233 Kelkheim (Taunus)(DE)**

**EP 0 231 836 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung liegt auf dem technischen Gebiet der metallfreien faserreaktiven Disazofarbstoffe.

Feueraktive Monoazoverbindungen mit einer 4-(β-Sulfatoethylsulfonyl-phenyl)-amino-2-chlor-s-triazin-6-ylamino-Gruppe als faserreaktiver Rest sind bereits aus der US-PS 3 223 470 bekannt.

Weiterhin sind aus der europäischen Patentanmeldungs-Veröffentlichung Nr. 0 042 108 A1 faserreaktive Disazoverbindungen bekannt, die ebenfalls solche (β-Sulfatoethylsulfonyl-phenyl)-amino-chlortriazinylamino-Gruppen enthalten; ihr Chromophor ist aus der 1-Aminonaphthalin-8-sulfonsäure als Kupplungskomponente und einer gegebenenfalls sulfosubstituierten Phenylazo- oder Naphthylazoanilin- oder -naphthylamin-Diazokomponente aufgebaut.

Im Gegensatz zu diesen bekannten Anilino- und Naphthylamino-Disazofarbstoffen der EP-A 0 042 108 beschreibt die europäische Patentanmeldungs-Veröffentlichung Nr. 0 087 133 Disazofarbstoffe mit zwar der gleichen faserreaktiven Gruppierung, jedoch völlig anderen Farbstoffaufbaus. Der Chromophor wird aus der bivalent kuppelbaren 1-Amino-8-hydroxy-3,6- oder 4,6-disulfonsäure und einem Sulfonaphthylamin als sauer angekuppelte Diazokomponente sowie einem 2-Sulfo-anilin, das diese faserreaktive Gruppierung gebunden enthält, als neutral angekuppelte Diazokomponente aufgebaut.

Mit der vorliegenden Erfindung wurden nunmehr neue, wertvolle, vorteilhafte wasserlösliche Disazoverbindungen mit faserreaktiven Farbstoffeigenschaften gefunden, die der allgemeinen Formel (1)

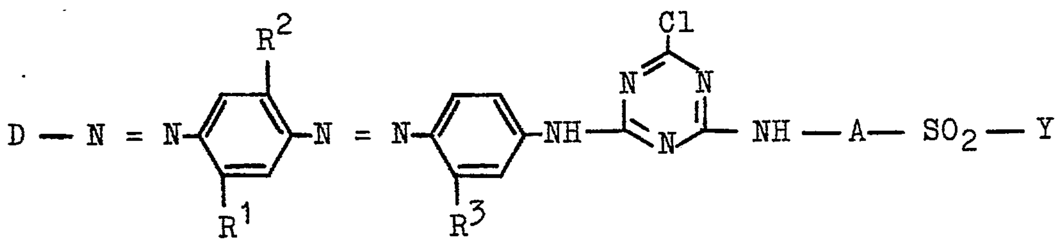

(1)

entsprechen. In dieser bedeuten:

D ist der 4,6,8-Trisulfo-naphth-2-yl-Rest;

$R_1$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, die Ureidogruppe oder eine Alkanoylaminogruppe und insbesondere die Acetylaminogruppe;

$R_2$ ist ein Wasserstoffatom, eine Alkylgruppe von 1 bis 4 C-Atomen, wie die Ethylgruppe und insbesondere die Methylgruppe, oder eine Alkoxygruppe von 1 bis 4 C-Atomen, wie die Ethoxygruppe und insbesondere die Methoxygruppe;

$R^3$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, die Ureidogruppe oder eine Alkanoylaminogruppe von 2 bis 5 C-Atomen, wie die Propionylaminogruppe und insbesondere die Acetylaminogruppe;

A ist ein Phenylenrest, bevorzugt der meta- oder para-Phenylenrest, der durch 1 oder 2 Substituenten, bevorzugt 1 Substituenten, aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy und Sulfo substituiert sein kann;

Y ist die Vinylgruppe oder eine Ethylgruppe, die in β-Stellung durch einen unter Bildung der Vinylgruppe alkalisch eliminierbaren Substituenten, wie beispielsweise eine Thiosulfato-, Phosphato- oder Acetoxygruppe oder ein Chloratom oder bevorzugt eine Sulfatogruppe, substituiert ist.

Die einzelnen Formelglieder können zueinander gleiche oder voneinander verschiedene Bedeutungen besitzen. Bevorzugt ist der Formelrest $R^1$ eine Methylgruppe und insbesondere ein Wasserstoffatom; ebenso ist $R^3$ bevorzugt eine Methylgruppe und insbesondere ein Wasserstoffatom und $R^2$ bevorzugt ein Wasserstoffatom. Bevorzugt ist A ein unsubstituierter oder ein durch eine Methoxygruppe substituierter Phenylenrest. Weiterhin ist Y bevorzugt die Vinylgruppe und insbesondere die β-Sulfatoethyl-Gruppe.

Eine Sulfogruppe ist eine Gruppe der allgemeinen Formel $-SO_3M$ , eine Carboxygruppe eine Gruppe der allgemeinen Formel -COOM , eine Thiosulfatogruppe eine Gruppe der allgemeinen Formel $-S-SO_3M$ , eine Phosphatogruppe eine Gruppe der allgemeinen Formel $-OPO_3M_2$ und eine Sulfatogruppe eine Gruppe der allgemeinen Formel $-OSO_3M$ , in welchen jeweils

M ein Wasserstoffatom oder ein Alkalimetall, wie Natrium, Kalium und Lithium, oder das Äquivalent eines Erdalkalimetalls, wie des Calciums, bevorzugt ein Alkalimetall, bedeutet.

Die neuen Disazoverbindungen der allgemeinen Formel (1) können in Form der freien Säure und in Form ihrer Salze vorliegen. Bevorzugt sind sie in Form der Salze, insbesondere der Alkalimetallsalze, und finden bevorzugt in Form der Salze Verwendung zum Färben und Bedrucken von hydroxy-und/oder carbonamidgruppenhaltigen Materialien, insbesondere Fasermaterialien. Hydroxygruppenhaltige Materialien sind beispielsweise natürliche und regenerierte Cellulose, wie Baumwolle, Leinen, Hanf, Jute, Viskosekunstseide und Zellwolle; carbonamidgruppenhaltige Materialien sind beispielsweise Seide, Wolle, natürliche, regenerierte und synthetische Polyamide, wie Polyamid-6, Polyamid-66 und Polyamid-11, insbesondere in Form von Fasermaterialien, desweiteren Leder und Fasermaterialien aus synthetischen Polyurethanen.

Die vorliegende Erfindung betrifft weiterhin ein Verfahren zur Herstellung der neuen Verbindungen der allgemeinen Formel (1), das dadurch gekennzeichnet ist, daß man 2,4,6-Trichlor-1,3,5-triazin (Cyanurchlorid) in beliebiger Reihenfolge mit einer aromatischen Aminoverbindungen der allgemeinen Formel (2)

$$H_2N-A-SO_2-Y \quad (2)$$

in welcher A und Y die obengenannten Bedeutungen haben, und mit einer Amino-Disazoverbindungen der allgemeinen Formel (3)

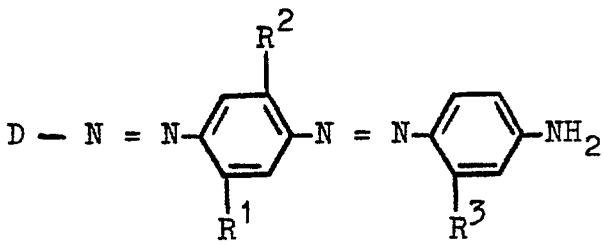

(3)

in welcher D, $R^1$, $R^2$ und $R^3$ die obengenannten Bedeutungen haben, analog an und für sich bekannten Verfahrensweisen der Reaktion von Cyanurchlorid bzw. Dichlortriazinylamino-Verbindungen mit Aminoverbindungen umsetzt.

So kann die Umsetzung von Cyanurchlorid mit einer Aminoverbindung der allgemeinen Formel (2) oder mit einer Aminodisazoverbindungen der allgemeinen Formel (3) zu einer Dichlortriazinylamino-Verbindungen der allgemeinen Formel (4) bzw. (5)

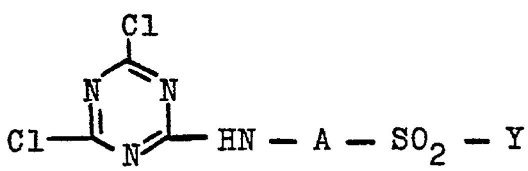

(4)

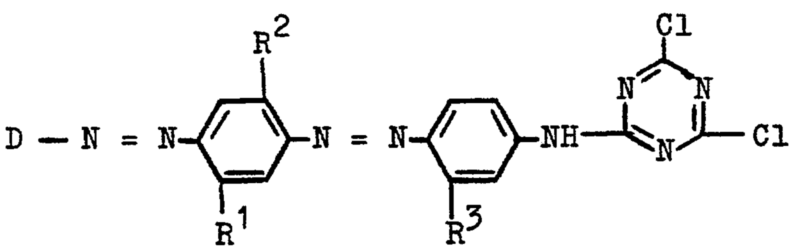

(5)

mit D, $R^1$, $R^2$ $R^3$, A und Y der obengenannten Bedeutung in organischem oder wäßrig-organischem Medium durchgeführt werden; vorzugsweise erfolgt die Umsetzung in wäßrigem Medium unter Zusatz eines säurebindenden Mittels bei einer Temperatur zwischen -10°C und 40°C, vorzugsweise unterhalb 30°C, insbesondere bei einer Temperatur zwischen 0 und 10°C, und bei einem pH-Wert zwischen 1,0 und 6,8.

Säurebindende Mittel sind beispielsweise Alkali- und Erdalkalicarbonate, Alkali- und Erdalkalihydrogencarbonate oder -hydroxide oder Alkaliacetate oder -phosphate, oder Mischungen derselben, wobei die Alkali- und Erdalkalimetalle vorzugsweise Natrium, Kalium und Lithium sowie Calcium sind; bevorzugt kann man Natrium-, Kalium oder Lithiumcarbonat, -phosphat oder -hydroxid verwenden.

Der Austausch des zweiten Chloratomes des in der ersten Stufe gebildeten primären Kondensationsproduktes der allgemeinen Formel (4) bzw. (5) durch Umsetzung in der zweiten Kondensationsstufe mit einer Amino-Disazoverbindung der allgemeinen Formel (3) bzw. mit einer Anilinverbindung der allgemeinen Formel (2) zu den erfindungsgemäßen Disazoverbindungen kann ebenfalls in organischem oder wäßrigorganischem Medium, erforderlichenfalls unter Zusatz eines säurebindenden Mittels, wie eines der oben angegebenen, erfolgen. Vorzugsweise wird diese zweite Kondensationsreaktion in wäßrigem

Medium durchgeführt und bevorzugt bei einer Temperatur zwischen 10 und 70°C, bevorzugt zwischen 20 und 50°C, und bei einem pH-Wert zwischen 2 und 7, insbesondere zwischen 3,0 und 7,0.

Die als Ausgangsverbindungen dienenden Anilinverbindungen der allgemeinen Formel (2) sind an und für sich bekannt, ebenso die Amino-Disazoverbindungen der allgemeinen Formel (3), die nach bekannten Verfahrensmethoden synthetisiert werden können, wie beispielsweise durch Kupplung eines Diazoniumsalzes des 4,6,8-Trisulfo-2-aminonaphthalins mit einer Verbindung der allgemeinen Formel (6)

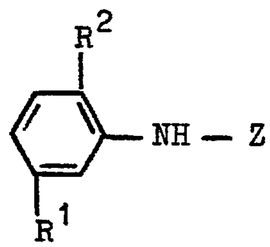

(6)

in welcher $R^1$ und $R^2$ die obengenannten Bedeutungen haben und Z ein Wasserstoffatom oder eine Sulfomethyl-Gruppe ist, und durch anschließende Diazotierung der erhaltenen Amino-Monoazoverbindung - nach vorheriger alkalischer Hydrolyse und Abspaltung der Sulfomethylgruppe, sofern in der Ausgangsverbindung (6) Z eine Sulfomethylgruppe war, - und Kupplung mit einer Verbindung der allgemeinen Formel (7)

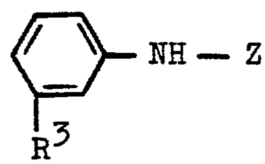

(7)

in welcher $R^3$ und Z die obengenannten Bedeutungen haben, und anschließender alkalischer Hydrolyse, sofern Z in der Ausgangsverbindung (7) eine Sulfomethylgruppe war.

Anilinverbindungen der allgemeinen Formel (2), die zur Herstellung der erfindungsgemäßen Verbindungen (1) dienen, sind beispielsweise 1-Amino-4-(β-sulfatoethylsulfonyl)-benzol, 1-Amino-3-(β-sulfatoethylsulfonyl)-benzol, 1-Amino-2-methoxy-5-(β-sulfatoethylsulfonyl)-benzol, 1-Amino-2-methoxy-4-(β-sulfatoethylsulfonyl)-benzol, 1-Amino-2-methyl-5-(β-sulfatoethylsulfonyl)-benzol, 1-Amino-2-methyl-4-(β-sulfatoethylsulfonyl)-benzol, 1-Amino-4-methoxy-5-(β-sulfatoethylsulfonyl)-benzol, 1-Amino-4-methyl-5-(β-sulfatoethylsulfonyl)-benzol, 1-Amino-2-methoxy-5-methyl-4-(β-sulfatoethylsulfonyl)-benzol, 1-Amino-2,5-dimethoxy-4-(β- sulfatoethylsulfonyl)-benzol, 1-Amino-2,4-dimethoxy-5-(β-sulfatoethylsulfonyl)-benzol, 1-Amino-2-methyl-5-methoxy- 4-(β-sulfatoethylsulfonyl)-benzol, 2-Chlor-1-amino-5-(β-sulfatoethylsulfonyl)-benzol, 4-Chlor-1-amino-2-methyl-3-(β-sulfatoethylsulfonyl)-benzol, 5-Chlor-1-amino-2-methoxy-4-(β-sulfatoethylsulfonyl)-benzol, 1-Amino-2-brom-4-(β-sulfatoethylsulfonyl)-benzol, 1-Amino-4-(β-sulfatoethylsulfonyl)-2-sulfo-benzol, 1-Amino-3-(β-sulfatoethylsulfonyl)4,6-disulfo-benzol und 2-Carboxy-1-amino-5-(β-sulfatoethylsulfonyl)-benzol und ebenso die β-Thiosulfatoethylsulfonyl-, β-Phosphatoethylsulfonyl-, β-Chlorethylsulfonyl-, β-Acetoxyethylsulfonyl- und Vinylsulfonyl-Derivate dieser Verbindungen.

Die Abscheidung und Isolierung der erfindungsgemäß hergestellten, eine gute Wasserlöslichkeit besitzenden Verbindungen der allgemeinen Formel (1) aus der Syntheselösung kann nach allgemein bekannten Methoden erfolgen, so beispielsweise durch Ausfällen aus dem Reaktionsmedium mittels Elektrolyten, wie beispielsweise Natriumchlorid oder Kaliumchlorid, mit nachfolgender Filtration oder durch Eindampfen der Reaktionslösung, beispielsweise durch Sprühtrocknung, wobei dieser Reaktionslösung eine Puffersubstanz zugefügt werden kann. Die Verbindungen (1) können auch direkt in Form der anfallenden, gegebenenfalls aufkonzentrierten Syntheselösungen, gegebenenfalls nach Zusatz einer Puffersubstanz, so beispielsweise als Färbepräparation, zur weiteren Verwendung gelangen.

Infolge der anfangs bereits erwähnten guten faserreaktiven Farbstoffeigenschaften sind die Verbindungen (1) zum Färben oder Bedrucken von hydroxy- und/oder carbonamidgruppenhaltigen Materialien geeignet; insbesondere färben sie Cellulosefasermaterialien nach den für faserreaktive Farbstoffe üblichen Applikations- und Fixiermethoden in farbstarken und sehr echten Tönen. Gegenstand der vorliegenden Erfindung ist somit auch die Verwendung der erfindungsgemäßen Verbindung der Formel (1) zum Färben oder Bedrucken der obengenannten Materialien bzw. ein Verfahren zum Färben oder Bedrucken dieser Materialien, beispielsweise analog bekannten, in der Technik üblichen Färbe- oder Druck- und Fixierverfahren, bei welchen man eine Disazoverbindung der allgemeinen Formel (1) in gelöster Form auf das genannte Substrat aufbringt und auf diesem, beispielsweise analog bekannten und in der Technik üblichen Verfahren, insbesondere solchen, die für faserreaktive Farbstoffe eingesetzt werden können, durch Hitzeeinwirkung und/oder durch Einwirkung eines alkalisch wirkenden Mittels fixiert.

So liefern die Verbindungen (1) beispielsweise auf Cellulosefasern nach den Ausziehverfahren aus langer Flotte unter Verwendung von säurebindenden Mitteln und gegebenenfalls neutralen Salzen, wie Natriumchlorid oder Natriumsulfat, Färbungen mit hoher Farbstärke und Farbausbeute. Ebenso werden nach dem Klotzverfahren und nach den üblichen Druckverfahren auf Cellulosefasermaterialien farbstarke Färbungen und Drucke erhalten. Die Fixierung erfolgt in der Regel mit Hilfe alkalisch wirkender Mittel, wie beispielsweise unter Anwendung von Alkalihydroxiden, Alkalicarbonaten, Alkaliphosphaten oder Alkalisilikaten, wobei das Alkalimetall vorzugsweise Natrium oder Kalium ist.

Die Kolorierung der carbonamidgruppenhaltigen Materialien erfolgt in der Regel im neutralen bis schwach sauren pH-Bereich nach den in der Technik üblichen Färbe- und Druckverfahren für natürliche und synthetische Polyamidfasermaterialien und Leder. Solche Färbe- und Fixierweisen sind in der Literatur zahlreich beschrieben.

Die mit den erfindungsgemäßen Verbindungen der Formel (1) auf den genannten Materialien, insbesondere Cellulosefasermaterialien, erhaltenen Färbungen und Drucke zeichnen sich in der Regel durch gute Egalität und durch eine hohe Farbstärke aus; sie zeigen sehr gute Lichtechtheiten, insbesondere auch sehr gute Naßlichtechtheiten und Schweißlichtechtheiten, weiterhin gute bis sehr gute Naßechtheiten, wie beispielsweise gute bis sehr gute Waschechtheiten, eine gute Chlorbadewassrechtheit, gute Walkechtheiten, Überfärbeechtheiten, Wasser- und Seewasserechtheiten und sehr gute saure und alkalische Schweißechtheiten. Die die erfindungsgemäßen Disazoverbindungen enthaltenden alkalischen Druckpasten zeigen eine gute Lagerbeständigkeit.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile verhalten sich zu Volumenteilen wie Kilogramm zu Liter. Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Beispiel 1

Zu einer kalten neutralen Lösung des Natriumsalzes von 59 Teilen 1-Amino-4-(β-sulfatoethylsulfonyl)-benzol in 200 Teilen Eiswasser fügt man 1 bis 2 Teile eines handelsüblichen Netzmittels und 40 Teile Cyanurchlorid und rührt die Mischung bei 0 bis 10°C, wobei durch Eintragen von Natriumhydrogencarbonat der pH-Wert zwischen 3 und 5 gehalten wird. Nach beendeter Umsetzung des Amins gibt man die entstandene Suspension zu einer neutralen wäßrigen Lösung, welche das Trinatriumsalz von 118 Teilen der Amino-Disazoverbindung der Formel

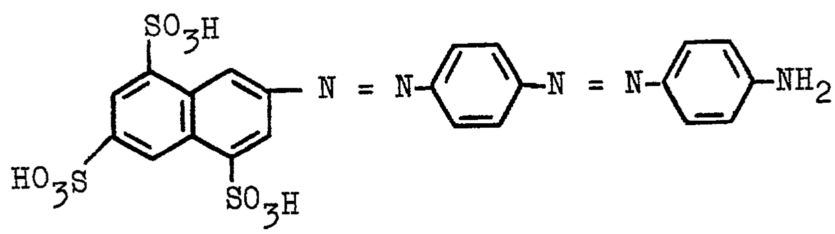

enthält, und erhöht die Temperatur allmählich auf 30°C; durch Eintragen von Natriumcarbonat wird ein pH-Bereich von 4 bis 6 eingehalten. Man rührt bei 30 bis 35°C noch über 10 Stunden bis zum Reaktionsende nach.

Die erfindungsgemäße Disazoverbindung der (in Form der freien Säure geschriebenen) Formel

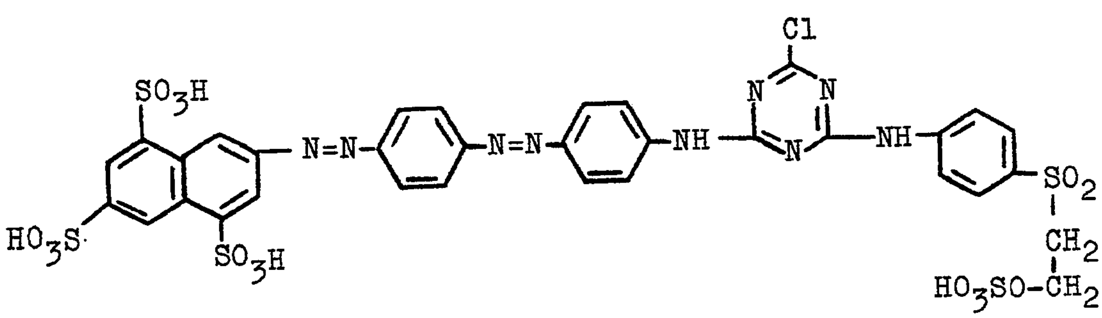

wird durch Zusatz von Natriumchlorid als Tetranatriumsalz abgeschieden, abfiltriert, getrocknet und gemahlen (in wäßriger Lösung zeigt sie ein Absorptionsmaximum $\lambda_{max}$ bei 387 nm). Sie liefert beispielsweise auf Baumwolle nach den für faserreaktive Farbstoffe üblichen Applikations- und Fixierverfahren rotstichig gelbe Färbungen und Drucke von sehr guten Lichtechtheits- und Naßechtheitseigenschaften, von denen insbesondere die sehr guten Wasch-, Schweiß-, Chlorwasser- und Naßlichtechtheitseigenschaften hervorgehoben werden können.

Beispiel 2

Zu einer Suspension aus 40 Teilen Cyanurchlorid in 400 Teilen Eis und Wasser fügt man 1 bis 2 Teile eines handelsüblichen Netzmittels und läßt eine kalte neutrale wäßrige Lösung des Trinatriumsalzes von 118 Teilen der im Beispiel 1 genannten Amino-Disazo-Ausgangsverbindung unter Rühren bei 0 bis 10°C einfließen. Durch Einstreuen von Natriumhydrogencarbonat wird der pH-Wert zwischen 4 und 6 gehalten. Man rührt den Ansatz bei 0 bis 10°C so lange weiter, bis die Aminodisazoverbindung praktisch umgesetzt ist. Dann fügt man eine neutrale Lösung des Natriumsalzes von 59 Teilen 1-Amino-4-(β-sulfatoethylsulfonyl)-benzol in 200 Teilen Wasser zu und erwärmt den Ansatz allmählich auf 30°C. Durch Einstreuen von Natriumhydrogencarbonat wird der pH-Wert zwischen 4,5 und 6,5 gehalten. Der Ansatz wird bei 30 bis 40°C noch bis zum Reaktionsende weitergerührt.

Die so hergestellte erfindungsgemäße Disazoverbindung besitzt die im Beispiel 1 angegebene Konstitution. Sie wird wie dort beschrieben, als Tetranatriumsalz isoliert und zeigt dieselben guten Farbstoffeigenschaften.

Beispiel 3

Das Trinatriumsalz einer auf üblichem Wege aus 76,7 Teilen 4,6,8-Trisulfo-2-aminonaphthalin als Diazokomponente und 19,4 Teilen 3-Amino-toluol als Kupplungskomponente hergestellten Monoazoverbindung wird in etwa 600 Teilen Wasser bei 0 bis 10°C mit wäßriger konzentrierter Salzsäure auf einen pH-Wert von unterhalb 1 gestellt und nach üblicher Methode mit einer wäßrigen Lösung von 14,5 Teilen Natriumnitrit diazotiert und anschließend, nach Zerstörung überschüßigen Nitrits, mit 19,4 Teilen 3-Amino-toluol nach Zugabe von 5 Teilen Natriumacetat und von Natriumcarbonat zur Einstellung eines pH-Wertes von 3 bis 4 bei 0 bis 10°C gekuppelt. (Die Aminoazo-Ausgangsverbindung kann auch so hergestellt werden, daß man nicht vom 3-Amino-toluol als Kupplungskomponente selbst ausgeht, sondern von 44,6 Teilen des aus 3-Amino-toluol, Formaldehyd und Natriumhydrogensulfit auf bekanntem Wege hergestellten Natriumsalzes der Formel

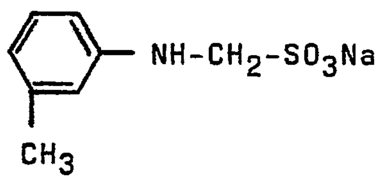

,

die Kupplung im pH-Bereich von 3 bis 5 zu Ende bringt und danach durch Erhitzen in natronalkalischer Lösung auf 80°C den Methansulfonsäure-Rest wieder abspaltet. Ähnlich kann die Aminodisazo-Ausgangsverbindung auch derart hergestellt werden, daß man anstelle des 3-Amino-toluols als Kupplungskomponente selbst 44,6 Teile des eben genannten Natriumsalzes des ω-Methansulfonsäure-Derivats des 3-Amino-toluols einsetzt, die Kupplung im pH-Bereich von 3 bis 5 zu Ende bringt und danach durch Erhitzen in natronalkalischer Lösung auf 80°C den Methansulfonsäure-Rest wieder abspaltet.).

Die erhaltene Aminodisazoverbindung wird sodann analog der Verfahrensweise des Beispieles 1 oder 2 mit den Ausgangskomponenten Cyanurchlorid und 4-(β-Sulfatoethylsulfonyl)-anilin zur erfindungsgemäßen Disazoverbindung weiter umgesetzt.

Die erfindungsgemäße Disazoverbindung der Formel

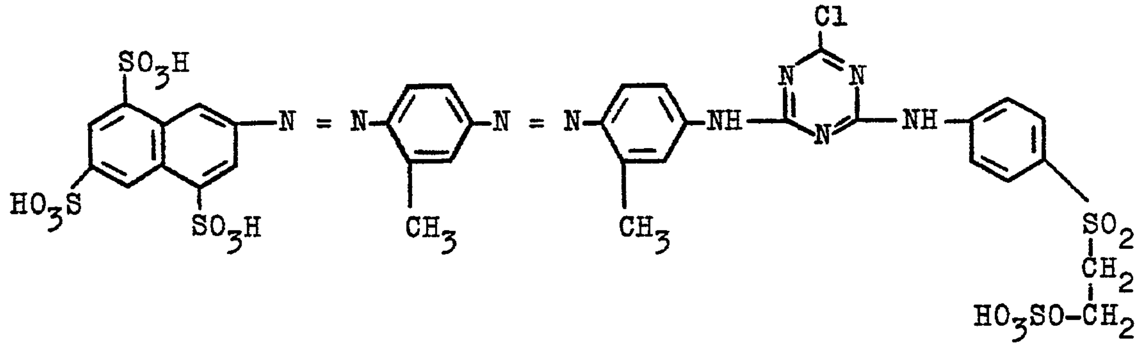

(in Form des Natriumsalzes isoliert) besitzt sehr gute faserreaktive Farbstoffeigenschaften und liefert nach den üblichen Applikations- und Fixiermethoden beispielsweise auf Baumwolle braunstichig orange Färbungen und Drucke von seht guten Licht- und Naßechtheitseigenschaften.

Beispiel 4

Man verfährt zur Herstellung einer erfindungsgemäßen Disazoverbindung gemäß der Verfahrensweise des Beispieles 1 oder 2, setzt jedoch anstelle der Ausgangsverbindung 1-Amino-4-(β-sulfatoethylsulfonyl)-benzol die äquivalente Menge an 1-Amino-4-(β-phosphatoethylsulfonyl)-benzol ein.
Man erhält das Alkalimetallsalz der Verbindung der Formel

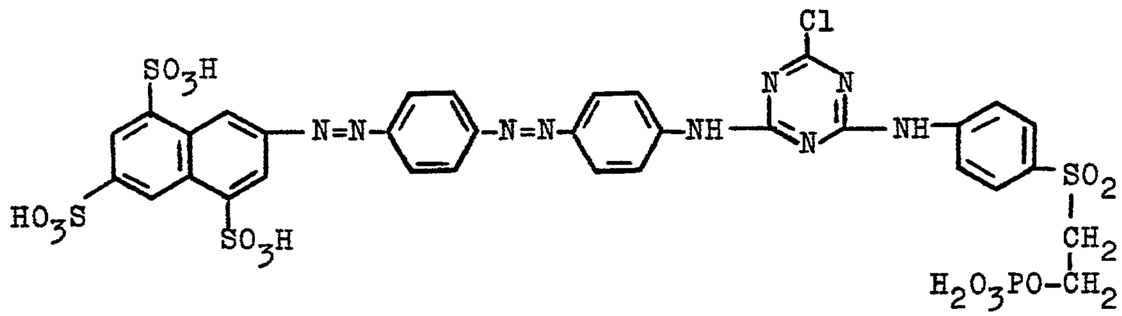

Diese erfindungsgemäße Disazoverbindung besitzt ebenfalls sehr gute faserreaktive Farbstoffeigenschaften ($\lambda_{max}$ in wäßriger Lösung bei 387 nm) und liefert insbesondere auf Baumwolle nach den hierfür üblichen Applikations- und Fixierverfahren rotstichig gelbe Färbungen und Drucke mit einer sehr guten Lichtechtheit und mit den für die erfindungsgemäße Disazoverbindung des Beispieles 1 angegebenen sehr guten Echtheitseigenschaften.

Beispiel 5

Eine wäßriger neutrale Lösung von 124 Teilen der im Beispiel 3 angegebenen Amino-Disazo-Ausgangsverbindung wird bei 0 bis 10°C unter gutem Rühren langsam mit einer Lösung von 40 Teilen Cyanurchlorid in 300 Teilen Aceton unter Einhaltung eines pH-Wertes zwischen 4 und 6 mittels Natriumhydrogencarbonat versetzt. Man rührt bei 0 bis 10°C bis zur beendeten Kondensationsreaktion nach und gibt sodann unter weiterem Rühren langsam eine Lösung von 46 Teilen 1-Amino-3-(β-chlorethylsulfonyl)-benzol in 300 Teilen Aceton hinzu, wobei man die Reaktionstemperatur allmählich auf 30°C ansteigen läßt und den pH 5 bis 6,5 hält, man rührt sodann bei 30 bis 40°C noch bis zur Beendigung dieser zweiten Kondensationsreaktion nach und isoliert die erfindungsgemäße Disazoverbindung der Formel

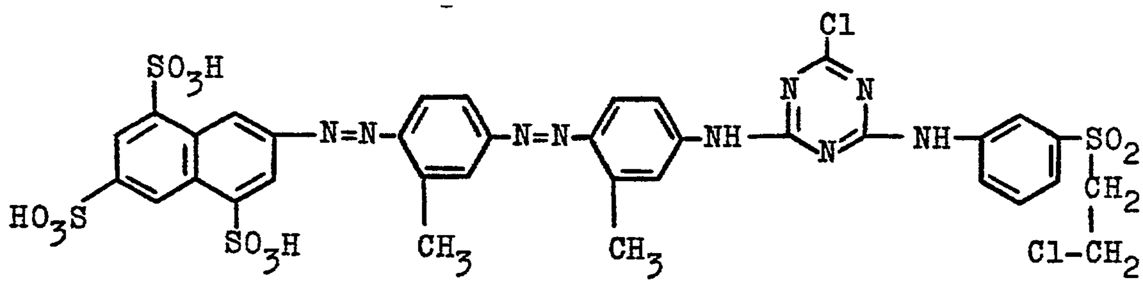

in Form ihres Alkalimetallsalzes. Sie besitzt sehr gute faserreaktive Farbstoffeigenschaften und liefert auf den in der Beschreibung genannten Fasermaterialien, wie insbesondere auf Cellulosefasermaterialien, farbstarke braunstichig orange Färbungen und Drucke mit einer sehr guten Lichtechtheit und mit guten Naßechtheitseigenschaften.

Beispiel 6

Zur Herstellung einer erfindungsgemäßen Disazoverbindung verfährt man gemäß der Verfahrensweise des Beispieles 5, ersetzt jedoch die dort verwendete Amino-Disazo-Ausgangsverbindung durch 118 Teile der im Beispiel 1 genannten Amino-Disazo-Ausgangsverbindung und das 1-Amino-3-(β-chlorethylsulfonyl)-benzol durch 39 Teile 1-Amino-4-vinylsulfonyl-benzol. Die erfindungsgemäße Verbindung der Formel

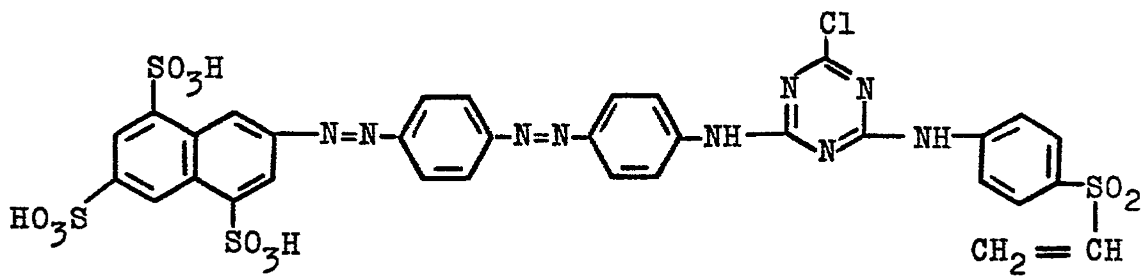

in Form ihres neutralen Alkalisalzes erhält man durch Aussalzen oder Eindampfen (Sprühtrocknung). Die erfindungsgemäße Verbindung zeigt sehr gute faserreaktive Farbstoffeigenschaften und färbt beispielsweise Cellulosefasermaterialien, wie Baumwolle, in rotstichig gelben Tönen mit sehr gute Licht- und Naßechtheitseigenschaften, die denen der in Beispiel 1 beschriebenen erfindungsgemäßen Disazoverbindung gleichkommen. ($\lambda_{max}$ in wäßriger Lösung bei 387 nm).

Beispiel 7

Zur Herstellung einer erfindungsgemäßen Disazoverbindung verfährt man gemäß der Verfahrensweise des Beispieles 5, ersetzt jedoch die dort verwendete Amino-Disazo-Ausgangsverbindung durch 118 Teile der im Beispiel 1 genannten Amino-Disazo-Ausgangsverbindung und das 1-Amino-3-(β-chlorethylsulfonyl)-benzol durch 48 Teile 1-Amino-3-(β-acetoxyethylsulfonyl)-benzol. Die erfindungsgemäße Verbindung der Formel

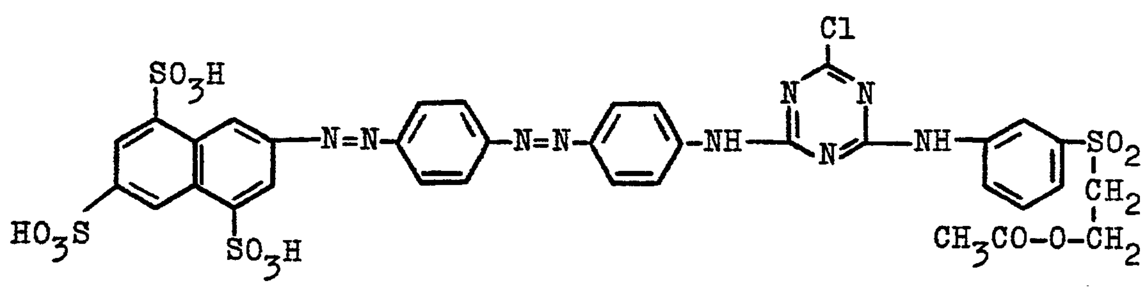

in Form ihres neutralen Alkalisalzes durch Aussalzen oder Eindampfen (Sprühtrocknung). Die erfindungsgemäße Verbindung zeigt sehr gute faserreaktive Farbstoffeigenschaften und färbt beispielsweise Cellulosefasermaterialien, wie Baumwolle, in rotstichig gelben Tönen mit sehr guten Licht- und Naßechtheitseigenschaften, die denen der in Beispiel 1 beschriebenen erfindungsgemäßen Disazoverbindung gleichkommen. ($\lambda_{max}$ in wäßriger Lösung bei 387 nm).

Beispiele 8 bis 65

In den nachfolgenden Tabellenbeispielen sind weitere erfindungsgemäße Disazoverbindungen der allgemeinen Formel (1) mit Hilfe ihrer Formelreste und Komponenten beschrieben, wobei die für den Formelrest Y genannten Reste $Y^1$ bis $Y^6$ die folgenden Bedeutungen haben:

$Y^1$ = β-Sulfatoethyl
$Y^2$ = β-Thiosulfatoethyl
$Y^3$ = β-Chlorethyl
$Y^4$ = Vinyl
$Y^5$ = β-Acetoxyethyl
$Y^6$ = β-Phosphatoethyl .

Diese erfindungsgemäßen Disazoverbindung lassen sich in erfindungsgemäßer Weise, beispielsweise analog den obigen Ausführungsbeispielen, aus den hieraus ersichtlichen Komponenten herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwenddungsmethoden, vorzugsweise nach den für faserreaktive Farbstoffe üblichen Applikations- und Fixiermethoden, farbstarke Färbungen und Drucke mit guten Echtheiten und den in dem jeweiligen Tabellenbeispiel angegebenen Farbton auf Baumwolle.

| Bsp. | D | $R^1$ | $R^2$ | $R^3$ | A | Y | Farbton |
|---|---|---|---|---|---|---|---|
| 10 | 4,6,8-Trisulfo-naphth-2-yl | H | H | H | p-Phenylen | $Y^2$ | rotstichig gelb |
| 11 | dito | H | H | H | dito | $Y^3$ | dito |
| 12 | dito | H | H | H | dito | $Y^5$ | dito |
| 13 | dito | H | H | H | m-Phenylen | $Y^1$ | dito |
| 14 | dito | H | H | H | dito | $Y^2$ | dito |
| 15 | dito | H | H | H | dito | $Y^3$ | dito |
| 16 | dito | H | H | H | dito | $Y^4$ | dito |
| 17 | dito | H | H | H | dito | $Y^6$ | dito |
| 18 | dito | H | H | H | 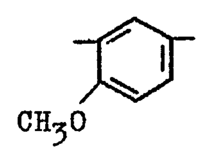 | $Y^1$ | dito |
| 19 | dito | H | H | H | dito | $Y^2$ | dito |
| 20 | dito | H | H | H | dito | $Y^3$ | dito |
| 21 | dito | H | H | H | m-Phenylen | $Y^4$ | rotstichig gelb |

| Bsp. | D | $R^1$ | $R^2$ | $R^3$ | A | Y | Farbton |
|---|---|---|---|---|---|---|---|
| 8 | 4,6,8-Trisulfo-naphth-2-yl | H | H | H | 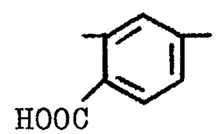 | $Y^1$ | rotstichig gelb |
| 9 | dito | H | H | H | dito | $Y^4$ | dito |

| Bsp. | D | $R^1$ | $R^2$ | $R^3$ | A | Y | Farbton |
|---|---|---|---|---|---|---|---|
| 22 | 4,6,8-Trisulfo-naphth-2-yl | H | H | H | m-Phenylen | $Y^5$ | rotstichig gelb |
| 23 | dito | H | H | H | dito | $Y^6$ | dito |
| 24 | dito | H | H | H | 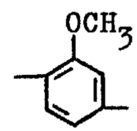 | $Y^1$ | dito |
| 25 | dito | H | H | H | dito | $Y^4$ | dito |
| 26 | dito | H | H | H | 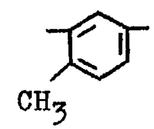 | $Y^1$ | dito |
| 27 | dito | H | H | H | dito | $Y^4$ | dito |
| 28 | dito | H | H | H | 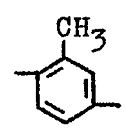 | $Y^1$ | dito |
| 29 | dito | H | H | H | dito | $Y^4$ | dito |
| 30 | dito | H | H | H | 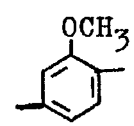 | $Y^1$ | dito |

| Bsp. | D | $R^1$ | $R^2$ | $R^3$ | A | Y | Farbton |
|---|---|---|---|---|---|---|---|
| 31 | 4,6,8-Trisulfo-naphth-2-yl | H | H | H | dito | $Y^4$ | rotstichig gelb |
| 32 | dito | H | H | H | 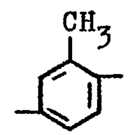 | $Y^1$ | dito |
| 33 | dito | H | H | H | dito | $Y^4$ | dito |
| 34 | dito | H | H | H | 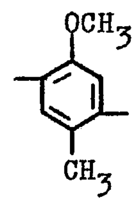 | $Y^1$ | dito |
| 35 | dito | H | H | H | dito | $Y^4$ | dito |
| 36 | dito | H | H | H | 2,5-Dimethoxy-1,4-phenylen | $Y^1$ | dito |
| 37 | dito | H | H | H | dito | $Y^4$ | dito |
| 38 | dito | H | H | H | 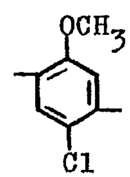 | $Y^1$ | dito |

| Bsp. | D | $R^1$ | $R^2$ | $R^3$ | A | Y | Farbton |
|---|---|---|---|---|---|---|---|
| 39 | 4,6,8-Trisulfo-naphth-2-yl | H | H | H | 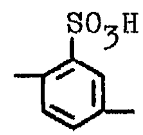 | $Y^1$ | rotstichig gelb |
| 40 | dito | H | H | H | dito | $Y^4$ | dito |
| 41 | dito | Methyl | Methoxy | H | p-Phenylen | $Y^1$ | braunstichig orange |
| 42 | dito | Methyl | Methoxy | H | dito | $Y^4$ | dito |
| 43 | dito | Methyl | Methoxy | Methyl | dito | $Y^1$ | dito |
| 44 | dito | Methyl | Methoxy | Methyl | dito | $Y^4$ | dito |
| 45 | dito | Acetyl-amino | H | H | dito | $Y^1$ | dito |
| 46 | dito | dito | H | H | dito | $Y^4$ | dito |
| 47 | dito | Methyl | H | Methyl | dito | $Y^2$ | dito |
| 48 | dito | Methyl | H | Methyl | dito | $Y^4$ | dito |
| 49 | dito | Methyl | H | Methyl | dito | $Y^5$ | dito |

| Bsp. | D | $R^1$ | $R^2$ | $R^3$ | A | Y | Farbton |
|---|---|---|---|---|---|---|---|
| 50 | 4,6,8-Trisulfo-naphth-2-yl | Methyl | H | Methyl | m-Phenylen | $Y^1$ | braunstichig orange |
| 51 | dito | Methyl | H | Methyl | dito | $Y^4$ | dito |
| 52 | dito | Ureido | H | H | p-Phenylen | $Y^1$ | braun |
| 53 | dito | Ureido | H | H | dito | $Y^2$ | braun |
| 54 | dito | Ureido | H | H | dito | $Y^4$ | braun |
| 55 | dito | Ureido | H | Ureido | dito | $Y^1$ | braun |
| 56 | dito | Ureido | H | Ureido | dito | $Y^4$ | braun |
| 57 | dito | Ureido | H | Ureido | m-Phenylen | $Y^1$ | braun |
| 58 | dito | Ureido | H | Ureido | dito | $Y^3$ | braun |
| 59 | dito | Ureido | H | Ureido | dito | $Y^4$ | braun |
| 60 | dito | H | H | Methyl | dito | $Y^1$ | orange |
| 61 | dito | H | H | Methoxy | dito | $Y^1$ | braunstichig orange |

| Bsp. | D | $R^1$ | $R^2$ | $R^3$ | A | Y | Farbton |
|---|---|---|---|---|---|---|---|
| 62 | 4,6,8-Trisulfo-naphth-2-yl | H | Methoxy | H | m-Phenylen | $Y^1$ | braunstichig orange |
| 63 | dito | Methoxy | H | Methyl | dito | $Y^1$ | dito |
| 64 | dito | Methyl | H | H | dito | $Y^1$ | dito |
| 65 | dito | Acetyl-amino | H | Acetyl-amino | dito | $Y^1$ | braun |

Anwendungsbeispiel 1

20 Teile der erfindungsgemäßen Verbindung (als Natriumsalz) von Beispiel 1 werden zusammen mit 50 Teilen Harnstoff in 300 Teilen Wasser gelöst. Die Lösung wird unterhalb von 40°C in 400 Teilen einer neutralen, wäßrigen 4%igen Alginatverdickung eingerührt.
Man gibt 10 Teile Natriumcarbonat hinzu und füllt das Ganze mit der 4%igen wäßrigen Alginatverdickung auf eine Gesamtmenge von 1000 Teilen auf. Man rührt gut durch und bedruckt mit der so hergestellten Druckpaste ein Baumwollgewebe, das nach dem Trocknen bei 60°C in einem handelsüblichen Dämpferaggregat 5 Minuten lang mit Sattdampf von 100 bis 103°C behandelt wird. Der so hergestellte Druck wird anschließend durch Spülen mit kaltem und heißem Wasser, durch Waschen mit einem neutralen Waschmittel und nochmaliges Spülen mit Wasser fertiggestellt. Nach dem Trocknen der Ware erhält man einen farbstarken rotstichig gelben Druck mit den in Beispiel 1 genannten guten Echtheiten.

Anwendungsbeispiel 2

Ein Gewebe aus mercerisierter Baumwolle wird mit einer wäßrigen Färbeflotte von 20°C, die im Liter 20 g des Natriumsalzes der erfindungsgemäßen Verbindung von Beispiel 3 sowie 18 g 33%ige wäßrige Natronlauge enthält, bei einer Flottenaufnahme von 80 %, bezogen auf das Warengewicht, geklotzt. Das geklotzte Gewebe wird auf eine Docke gewickelt, in eine Folie eingeschlagen und acht Stunden bei Raumtemperatur liegengelassen. Anschließend wird es durch Spülen mit kaltem Wasser, durch Behandeln mit einem wenig Essigsäure enthaltenden wäßrigen Bad und durch nochmaliges Spülen in kaltem und heißem Wasser fertiggestellt. Nach dem Trocknen erhält man eine farbstarke rotstichig gelbe Färbung mit den im Beispiel 1 genannten guten Echtheiten.

Anwendungsbeispiel 3

100 Teile eines Gewebes aus mercerisierter Baumwolle werden 10 Minuten lang bei 80°C in 3000 Volumenteilen eines wäßrigen Färbebades behandelt, das 5 Teile des Natriumsalzes der erfindungsgemäßen Verbindung von Beispiel 1 sowie 150 Teile wasserfreies Natriumsulfat enthält. Nach dieser 10-minütigen Behandlung werden 15 Teile wasserfreies Natriumcarbonat zugesetzt.
Die Färbung wird 60 Minuten bei 80°C weitergeführt. Anschließend wird das gefärbte Gewebe in üblicher Weise, wie beispielsweise im Anwendungsbeispiel 2, fertiggestellt. Man erhält eine farbstarke, rotstichig gelbe Färbung mit den genannten guten Echtheiten.

Anwendungsbeispiel 4

100 Teile eines Wollgewebes werden in ein 40°C warmes wäßriges Färbebad eingebracht, das aus 3000 Teilen Wasser, 2 Teilen des Natriumsalzes der im Beispiel 1 beschriebenen erfindungsgemäßen Verbindung, 0,15 Teilen eines Anlagerungsproduktes von 12 Mol Ethylenoxid an 1 Mol Stearylamin, 2 Teilen Ammoniumacetat und 2 Teilen 60%iger wäßriger Essigsäure besteht.
Die Färbetemperatur wird innerhalb von 30 Minuten auf Kochtemperatur erhöht und die Färbung anschließend 60 Minuten lang ei 100°C weitergeführt. Nach dem üblichen Auswaschen und Fertigstellen der erhaltenen Wollfärbung zeigt dieses Wollgewebe einen farbstarken, rotstichigen gelben Farbton von sehr guter Lichtechtheit und sehr guten Naßechtheiten.

Anwendungsbeispiel 5

Man verfährt in der im Anwendungsbeispiel 4 angegebenen Färbeweise, ersetzt jedoch das Wollgewebe durch 100 Teile eines Gewebes aus einer Polycaprolactam-Faser. Man erhält ebenfalls eine farbstarke, rotstichig gelbe Färbung von guten Gebrauchsechtheiten.
Gemäß den obigen Anwendungsbeispielen lassen sich auch die anderen hier in den Ausführungsbeispielen und Tabellenbeispielen beschriebenen erfindungsgemäßen Disazoverbindungen in die Färbe- und Druckverfahren einsetzen. Man erhält analog hierzu mit diesen erfindungsgemäßen Disazoverbindungen der Beispiele 2 bis 65 ebenfalls sehr farbstarke Färbungen und Drucke von guten Licht- und Naßechtheitseigenschaften.

## Patentansprüche

1. Eine wasserlösliche Disazoverbindung, die der allgemeinen Formel (1)

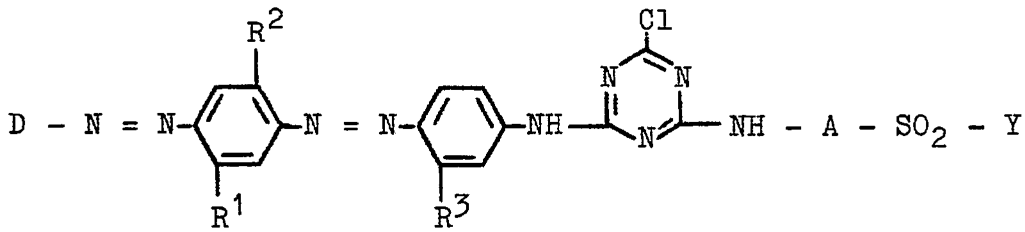
(1)

entspricht, in welcher bedeutet:
D ist der 4,6,8-Trisulfo-naphth-2-yl-Rest;
$R^1$ ist ein Wasserstoffatom, eine Alkylgruppe von 1 bis 4 C-Atomen oder eine Alkoxygruppe von 1 bis 4 C-Atomen, die Ureidogruppe oder eine Alkanoylaminogruppe von 2 bis 5 C-Atomen;
$R^2$ ist ein Wasserstoffatom, eine Alkylgruppe von 1 bis 4 C-Atomen oder eine Alkoxygruppe von 1 bis 4 C-Atomen;
$R^3$ ist ein Wasserstoffatom, eine Alkylgruppe von 1 bis 4 C-Atomen, eine Alkoxygruppe von 1 bis 4 C-Atomen, die Ureidogruppe oder eine Alkanoylaminogruppe von 2 bis 5 C-Atomen;
A ist ein Phenylrest, der durch 1 oder 2 Substituenten aus der Gruppe Alkyl von 1 bis 4 C-Atomen, Alkoxy von 1 bis 4 C-Atomen, Chlor, Brom, Carboxy und Sulfo substituiert sein kann;
Y ist die Vinylgruppe oder eine Ethylgruppe, die in β-Stellung durch einen alkalisch eliminierbaren Substituierten substituiert ist.

2. Verbindung nach Anspruch 1, dadurch gekennzeichnet, daß $R^1$ eine Methylgruppe oder bevorzugt ein Wasserstoffatom ist.

3. Verbindung nach Anspruch 1, dadurch gekennzeichnet, daß $R^2$ ein Wasserstoffatom ist.

4. Verbindung nach mindestens einem der Ansprüche 1 bis 3, dadurch gekennzeichnet, daß $R^3$ eine Methylgruppe oder bevorzugt ein Wasserstoffatom ist.

5. Verbindung nach mindestens einem der Ansprüche 1 bis 4, dadurch gekennzeichnet, daß A einen unsubstituierten Phenylenrest bedeutet oder einen durch eine Methoxygruppe substituierten Phenylenrest darstellt.

6. Verbindung nach mindestens einem der Ansprüche 1 bis 4, dadurch gekennzeichnet, daß A ein p-Phenylenrest ist.

7. Verbindung nach mindestens einem der Ansprüche 1 bis 4, dadurch gekennzeichnet, daß A ein m-Phenylenrest ist.

8. Verbindung nach mindestens einem der Ansprüche 1 bis 7, dadurch gekennzeichnet, daß Y für die Vinylgruppe oder eine β-Sulfatoethyl-, β-Thiosulfatoethyl-, β-Phosphatoethyl-, β-Acetoxyethyl- oder β-Chlorethyl-Gruppe steht.

9. Verbindung nach mindestens einem der Ansprüche 1 bis 7, dadurch gekennzeichnet, daß Y die Vinylgruppe ist.

10. Verbindung nach mindestens einem der Ansprüche 1 bis 7, dadurch gekennzeichnet, daß Y die β-Sulfatoethylgruppe ist.

11. Verfahren zur Herstellung der in Anspruch 1 genannten und definierten Verbindungen der allgemeinen Formel (1), dadurch gekennzeichnet, daß man in beliebiger Reihenfolge 2,4,6-Trichlor-1,3,5-triazin mit einer Anilinverbindung der allgemeinen Formel (2)

$$H_2N-A-SO_2-Y \quad (2)$$

in welcher A und Y die in Anspruch 1 genannten Bedeutungen haben, und mit einer Amino-Disazoverbindung der allgemeinen Formel (3)

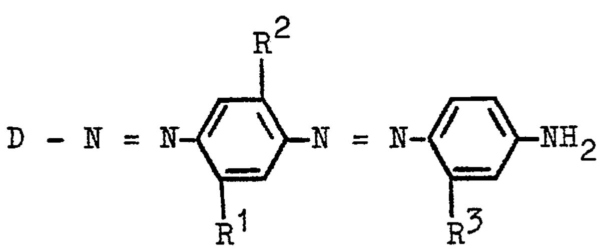
(3)

in welcher D, $R^1$, $R^2$ und $R^3$ die in Anspruch 1 genannten Bedeutungen haben, umsetzt.

12. Verwendung einer Disazoverbindung entsprechend der in Anspruch 1 genannten und definierten allgemeinen Formel (1) als Farbstoff.

13. Verwendung nach Anspruch 12 zum Färben oder Bedrucken von hydroxy- und/oder carbonamidgruppenhaltigem Material, insbesondere Fasermaterial.

14. Verfahren zum Färben oder Bedrucken von hydroxy und/oder carbonamidgruppenhaltigem Material, vorzugsweise Fasermaterial, bei welchem man einen Farbstoff auf das Material aufbringt oder in das Material einbringt und ihn mittels Wärme und/oder in Gegenwart eines säurebindenden Mittels fixiert, dadurch gekennzeichnet, daß man als Farbstoff eine Disazoverbindung entsprechend der in Anspruch 1 genannten und definierten allgemeinen Formel (1) einsetzt.

## Claims

1. A water-soluble disazo compound which conforms to the general formula (1)

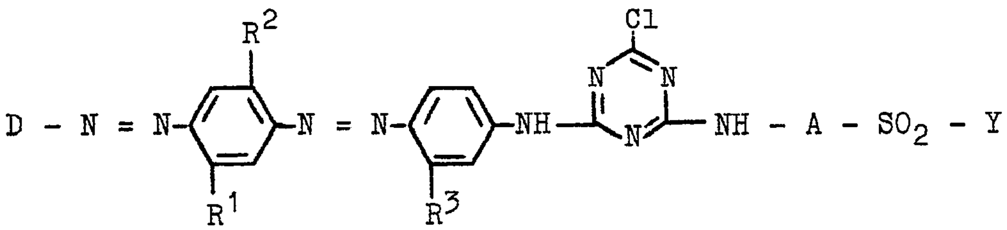

(1)

in which
D is the 4,6,8-trisulfonaphth-2-yl radical;
$R^1$ is a hydrogen atom, an alkyl group of 1 to 4 carbon atoms, an alkoxy group of 1 to 4 carbon atoms, the ureido group or an alkanoylamino group of 2 to 5 carbon atoms;
$R^2$ is a hydrogen atom, an alkyl group of 1 to 4 carbon atoms or an alkoxy group of 1 to 4 carbon atoms;
$R^3$ is a hydrogen atom, an alkyl group of 1 to 4 carbon atoms, an alkoxy group of 1 to 4 carbon atoms, the ureido group or an alkanoylamino group of 2 to 5 carbon atoms;
4 is a phenylene radical which can be substituted by 1 or 2 substituents from the group alkyl of 1 to 4 carbon atoms, alkoxy of 1 to 4 carbon atoms, chlorine, bromine, carboxyl and sulfo;
Y is the vinyl group or an ethyl group which is substituted in the β-position by a substituent which is eliminatable under alkaline conditions.

2. A compound as claimed in claim 1, wherein $R^1$ is a methyl group or preferably a hydrogen atom.

3. A compound as claimed in claims 1 or 2, wherein $R^2$ is a hydrogen atom.

4. A compound as claimed in at least any one of claims 1 to 3, wherein $R^3$ is a methyl group or preferably a hydrogen atom.

5. A compound as claimed in at least one of claims 1 to 4, wherein A denotes an unsubstituted phenylene radical or represents a phenylene radical which is substituted by a methoxy group.

6. A compound as claimed in at least one of claims 1 to 4, wherein A is a p-phenylene radical.

7. A compound as claimed in at least one of claims 1 to 4, wherein A is an m-phenylene radical.

8. A compound as claimed in at least one of claims 1 to 7, wherein Y denotes the vinyl group or a β-sulfatoethyl, β-thiosulfatoethyl, β-phosphatoethyl, β-acetoxyethyl or β-chloroethyl group.

9. A compound as claimed in at least one one of claims 1 to 7, wherein Y is the vinyl group.

10. A compound as claimed in at least one of claims 1 to 7, wherein Y is the β-sulfatoethyl group.

11. A process for preparing the compounds of the general formula (1) mentioned and defined in claim 1, which comprises reacting, in any desired order, 2, 4, 6-trichloro-1, 3, 5-triazine with an aniline compound of the general formula (2)

$$H_2N-A-SO_2-Y \quad (2)$$

in which A and Y have the meanings mentioned in claim 1, and with an aminodisazo compound of the general formula (3)

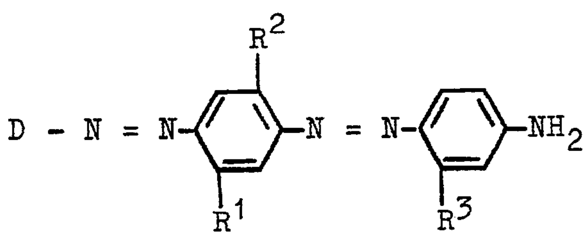

(3)

in which D, $R^1$, $R^2$ and $R^3$ have the meanings mentioned in claim 1.

12. Use of a disazo compound conforming to the general formula (1) mentioned and defined in claim 1, as a dye.

13. Use as claimed in claim 12 for dyeing or printing hydroxyl- and/or carboxamido-containing material, in particular fiber material.

14. A process for dyeing or printing hydroxyl- and/or carboxamido-containing material, preferably fiber material, by applying a dye to the material or incorporating it into the material and fixing it by means of heat and/or in the presence of an acid-binding agent, which comprises using as the dye a disazo compound conforming to the general formula (1) mentioned and defined in claim 1.

## Revendications

1. Composé disazoïque hydrosoluble, répondant à la formule générale (1):

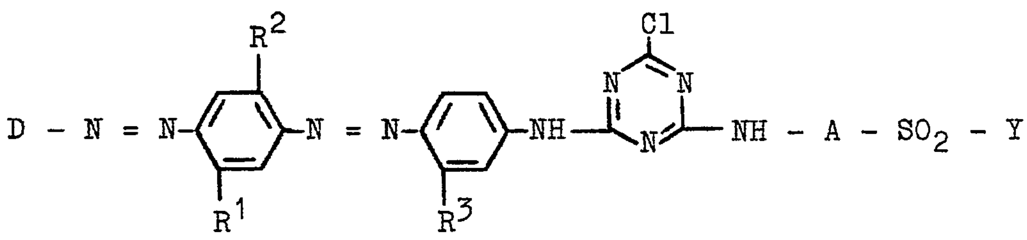 (1)

dans laquelle:
D représente le reste trisulfo-4,6,8 naphthyle-2;
$R^1$ représente un atome d'hydrogène, un groupe alkyle ayant 1 à 4 atomes de carbone, un groupe alcoxy ayant 1 à 4 atomes de carbone, le groupe uréido ou un groupe alcanoylamino ayant 2 à 5 atomes de carbone;
$R^2$ représente un atome d'hydrogène, un groupe alkyle ayant 1 à 4 atomes de carbone ou un groupe alcoxy ayant 1 à 4 atomes de carbone;
$R^3$ représente un atome d'hydrogène, un groupe alkyle ayant 1 à 4 atomes de carbone, un groupe alcoxy ayant 1 à 4 atomes de carbone, un groupe uréido ou un groupe alcanoylamino ayant 2 à 5 atomes de carbone;
A représente un reste phénylène, pouvant porter un ou deux substituants choisis parmi un groupe alkyle ayant 1 à 4 atomes de carbone, alcoxy ayant 1 à 4 atomes de carbone, un atome de chlore ou de brome, un groupe carboxy et un groupe sulfo;
Y représente le groupe vinyle ou un groupe éthyle, pouvant être substitué en position bêta par un substituant éliminable par voie alcaline.

2. Composé selon la revendication 1, caractérisé en ce que $R^1$ représente un groupe méthyle ou de préférence un atome d'hydrogène.

3. Composé selon la revendication 1 ou 2, caractérisé en ce que $R^2$ représente un atome d'hydrogène.

4. Composé selon au moins l'une des revendications 1 à 3, caractérisé en ce que $R^3$ représente un groupe méthyle ou de préférence un atome d'hydrogène.

5. Composé selon au moins l'une des revendications 1 à 4, caractérisé en ce que A représente un reste phénylène non substitué ou bien un reste phénylène substitué par un groupe méthoxy.

6. Composé selon au moins l'une des revendications 1 à 4, caractérisé en ce que A est un groupe p-phénylène.

7. Composé selon l'une au moins des revendications 1 à 4, caractérisé en ce que A est un groupe m-phénylène.

8. Composé selon l'une au moins des revendications 1 à 7, caractérisé en ce que Y représente le groupe vinyle ou un groupe bêta-sulfatoéthyle, bêta-thiosulfatoéthyle, bêta-phosphatoéthyle, bêta-acétoxyéthyle ou bêta-chloréthyle.

9. Composé selon l'une au moins des revendications 1 à 7, caractérisé en ce que Y représente le groupe vinyle.

10. Composé selon l'une au moins des revendications 1 à 7, caractérisé en ce que Y représente le groupe bêta-sulfatoéthyle.

11. Procédé pour préparer les composés de formule générale (1), cités et définis à la revendication 1, caractérisé en ce qu'on fait réagir dans un ordre quelconque la trichloro-2,4,6 triazine-1,3,5 avec une aniline de formule générale (2):

$H_2N-A-SO_2-Y$ (2)

(dans laquelle A et Y ont les sens indiqués à la revendication 1) et avec un composé amino-disazoïque de formule générale (3):

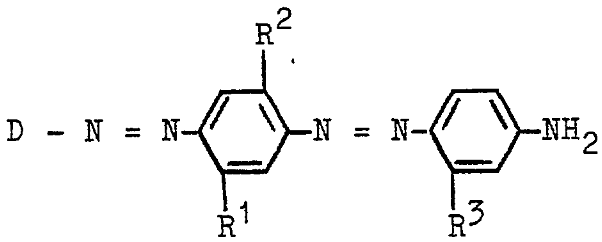 (3)

dans laquelle les symboles D, $R^1$, $R^2$ et $R^3$ ont les sens indiqués à la revendication 1.

12. Utilisation, comme colorant, d'un composé disazoïque répondant à la formule générale (1) citée et définie à la revendication 1.

13. Utilisation selon la revendication 12 pour teindre ou imprimer des matières contenant les groupes hydroxyles et/ou carboxamides, en particulier de la matière fibreuse.

14. Procédé pour teindre et imprimer de la matière contenant des groupes hydroxyles et/ou carboxamides, avantageusement de la matière fibreuse, procédé dans lequel on applique un colorant sur la matière ou on l'introduit ou l'imprime dans la matière et on l'y fixe à l'aide de la chaleur et/ou en présence d'un agent de fixation des acides, procédé caractérisé en ce qu'on utilise comme colorant un composé disazoïque répondant à la formule générale (1) citée et définie à la revendication 1.